(19) Europäisches Patentamt
European Patent Office
Office européen des brevets

(11) **EP 3 178 036 B1**

(12) **EUROPÄISCHE PATENTSCHRIFT**

(45) Veröffentlichungstag und Bekanntmachung des Hinweises auf die Patenterteilung:
**06.03.2019  Patentblatt 2019/10**

(21) Anmeldenummer: **15750920.9**

(22) Anmeldetag: **24.06.2015**

(51) Int Cl.:
*G06K 9/00* *(2006.01)*     *G06K 9/20* *(2006.01)*

(86) Internationale Anmeldenummer:
**PCT/DE2015/200389**

(87) Internationale Veröffentlichungsnummer:
**WO 2016/019956 (11.02.2016 Gazette 2016/06)**

(54) **FAHRERASSISTENZSYSTEM**

DRIVER ASSISTANCE SYSTEM

AIDE À LA CONDUITE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.08.2014  DE 102014215372**

(43) Veröffentlichungstag der Anmeldung:
**14.06.2017  Patentblatt 2017/24**

(73) Patentinhaber: **Conti Temic Microelectronic GmbH**
**90411 Nürnberg (DE)**

(72) Erfinder: **KRÖKEL, Dieter**
**88097 Eriskirch (DE)**

(56) Entgegenhaltungen:
**DE-A1-102006 024 187     KR-A- 20130 028 519**

• **Simon Thibault: "Panomorph Based Panoramic Vision Sensors" In: "Vision Sensors and Edge Detection", August 2010 (2010-08), Sciyo, XP55218910, ISBN: 978-953-30-7098-8 Seiten 1-28, DOI: 10.5772/56692, Seiten 9-11 Seiten 17-21**
• **YASUO KUNIYOSHI ET AL: "Active stereo vision system with foveated wide angle lenses", 5. Dezember 1995 (1995-12-05), RECENT DEVELOPMENTS IN COMPUTER VISION, SPRINGER BERLIN HEIDELBERG, BERLIN, HEIDELBERG, PAGE(S) 191 - 200, XP019186305, ISBN: 978-3-540-60793-9 Zusammenfassung Seiten 191-197**
• **SUEMATSU Y ET AL: "An advanced vision sensor with fovea", SIGNAL PROCESSING AND SYSTEM CONTROL, FACTORY AUTOMATION. PACIFIC GROVE, NOV. 27 - 30, 1990; [PROCEEDINGS OF THE ANNUAL CONFERENCE OF THE INDUSTRIAL ELECTRONICS SOCIETY. (IECON)], NEW YORK, IEEE, US, Bd. CONF. 16, 27. November 1990 (1990-11-27), Seiten 581-585, XP010038202, DOI: 10.1109/IECON.1990.149206 ISBN: 978-0-87942-600-2**
• **SIMON THIBAULT ET AL: "360 degree vision system: opportunities in transportation", PROCEEDINGS OF SPIE, Bd. 6758, 26. September 2007 (2007-09-26), Seiten 67580H-67580H-9, XP055219515, US ISSN: 0277-786X, DOI: 10.1117/12.735292 ISBN: 978-1-62841-799-9**

## Beschreibung

Die Erfindung betrifft ein Fahrerassistenzsystem für ein Kraftfahrzeug umfassend eine Umfeldkamera und eine Bildauswerteeinheit.

Umfeldkameras, die zur Umfelderfassung und somit zur Generierung von Bilddaten von einer Umgebung ausgebildet sind, sind an sich bekannt und beispielsweise in den Veröffentlichungen Simon Thibault: "Panomorph Based Panoramic Vision Sensors", August 2010 (2010-08), Sciyo, XP55218910, ISBN: 978-953-30-7098-8, Seiten 1-28, DOI: 10.5772/56692 und YASUO KUNIYOHI ET AL: "Active stereo vision system with foveated wide angle lenses", 5. Dezember 1995 (1995-12-05), RECENT DEVELOPMENTS IN COMPUTER VISION, SPRINGER BERLIN HEIDELBERG, BERLIN, HEIDELBERG, PAGES 191-200, XP019186305, ISBN: 978-3-540-60793-9 sowie SUEMATSU Y ET AL: "An advanced vision sensor with fovea", SIGNAL PROCESSING AND SYSTEM CONTROL, FACTORY AUTOMATION. PACIFIC GROVE, NOV. 27-30, 1990, [PROCEEDINGS OF THE ANNUAL CONFERENCE OF THE INDUSTRIAL ELECTRONICS SOCIETY. (IECON)], NEW YORK, IEEE, US, Bd. CONF. 16, 27. November 1990 (1990-11-27), Seiten 581-585, XP010038202, DOI: 10.1109/IECON.1990.149206, ISBN: 978-0-87942-600-2 beschrieben.

Weiter sind die meisten Kraftfahrzeuge der neueren Fahrzeuggenerationen mit zumindest einem Fahrerassistenzsystem, wie zum Beispiel einem Navigationssystem oder einem sogenannten Tempomat, ausgestattet, welches einen Fahrer bei der Fahrzeugführung unterstützt.

Einige dieser Fahrerassistenzsysteme weisen dabei eine Umfeldkamera auf, mit deren Hilfe Bilddaten generiert werden, die die Umgebung des Kraftfahrzeuges mit dem entsprechenden Fahrerassistenzsystem zumindest teilweise abbilden. Diese Bilddaten werden dann mit Hilfe einer Auswerteeinheit ausgewertet, um zum Beispiel mittels eines Objekterkennungs-Algorithmus potentielle Hindernisse, andere Verkehrsteilnehmer oder mögliche Gefahren zu erkennen, vor denen dann der Fahrer beispielsweise durch ein akustisches oder optisches Hinweissignal gewarnt wird.

Darüber hinaus befinden sich derzeit Fahrerassistenzsysteme in der Entwicklung, die für eine zumindest zeitweise vollautomatisierte Fahrzeugführung ausgebildet sind, bei denen also das Fahrerassistenzsystem die Kontrolle über das entsprechende Kraftfahrzeug zumindest zeitweise vollständig übernimmt. Auch diese Fahrerassistenzsysteme weisen typischerweise zumindest eine Umfeldkamera auf, wobei hier die bei der Auswertung der Bilddaten gewonnenen Informationen einer Planung der Fahrzeugsteuerung durch das Fahrerassistenzsystem und somit einer vollautomatisierten Fahrzeugsteuerung zugrundegelegt werden.

Damit derartige Fahrerassistenzsysteme möglichst zuverlässig arbeiten, ist es notwendig, dass möglichst alle relevanten Informationen aus dem Umfeld des entsprechenden Kraftfahrzeuges durch die von der Umfeldkamera generierten Bilddaten wiedergegeben werden und dass die Auswerteeinheit des Fahrerassistenzsystems die wesentlichen Informationen aus diesen Bilddaten herausliest und somit die Bilddaten korrekt interpretiert.

Ausgehend hiervon liegt der Erfindung die Aufgabe zugrunde, ein vorteilhaft ausgestaltetes Fahrerassistenzsystem anzugeben.

Diese Aufgabe wird erfindungsgemäß gelöst durch ein Fahrerassistenzsystem mit den Merkmalen des Anspruchs 1. Bevorzugte Weiterbildungen sind in den rückbezogenen Ansprüchen enthalten.

Ein erfindungsgemäßes Fahrerassistenzsystem ist hierbei für ein Kraftfahrzeug ausgelegt und umfasst eine Umfeldkamera zur Generierung von Bilddaten, die das Umfeld des Kraftfahrzeuges zumindest teilweise abbilden, sowie eine Bildauswerteeinheit, welche zur Auswertung von Bilddaten nach dem eingangs genannten Prinzip ausgebildet ist. Dabei weist die Umfeldkamera einen Bildsensor auf, der aus mehreren Pixeln aufgebaut ist, sowie eine Optik, die bevorzugt unverstellbar oder starr ausgebildet ist, bei der also insbesondere die Brennweite oder der horizontale Bildwinkel nicht variiert werden kann, wie dies beispielsweise bei Fotoapparaten oder sogenannten Digitalkameras zum Teil möglich ist. Um dennoch verschiedene Objekte in verschiedenen Entfernungen zum Kraftfahrzeug ausreichend scharf abbilden zu können, ist die Umfeldkamera weiter derart gestaltet, dass bei dieser ein um eine optische Achse gelegener horizontaler Bildwinkel gegeben ist, wobei die Winkelauflösung der Umfeldkamera über den horizontalen Bildwinkel hinweg variiert. Auf diese Weise ist die Umfeldkamera einerseits verhältnismäßig einfach gehalten und andererseits an die speziellen Anforderungen für den Einsatz in einem Kraftfahrzeug als Teil eines Fahrerassistenzsystems angepasst.

Weiter soll das erfindungsgemäße Fahrerassistenzsystem derart gestaltet sein, dass einerseits möglichst alle relevanten Informationen aus dem Umfeld oder zumindest dem Vorfeld des entsprechenden Kraftfahrzeuges mit Hilfe der Umfeldkamera erfasst und abgebildet werden, so dass diese in den von der Umfeldkamera generierten Bilddaten enthalten sind, und andererseits soll der Rechenaufwand bei der automatisierten Auswertung von Bilddaten in der Bildauswerteeinheit möglichst gering gehalten werden, wobei gleichzeitig sichergestellt werden soll, dass die Bildauswerteeinheit zuverlässig alle relevanten Informationen bei der Auswertung von Bilddaten aus diesen Bilddaten herausliest oder in diesen Bilddaten erkennt. Auf diese Weise wird sichergestellt, dass die Auswertung von Bilddaten zügig erfolgt und dass die Bilddaten korrekt interpretiert werden.

Gemäß der Lösungsansätze ist das Fahrerassistenzsystems derart ausgebildet, dass die Winkelauflösung der Umfeldkamera in einem Mittenbereich um die optische Achse im Wesentlichen konstant ist, in einem sich unmittelbar daran anschließenden Übergangsbereich variiert und in einem sich unmittelbar an den Übergangsbereich anschließenden Randbereich am Rande des Bildwinkels wiederum im Wesentlichen konstant ist. Zudem umfasst das Fahrerassistenzsystem bei dieser Ausgestaltungsvariante eine Bildaufbereitungseinheit, welche für eine Aufbereitung der von der Umfeldkamera generierten Bilddaten zur Vorgabe einer virtuellen Winkelauflösung eingerichtet ist. Dabei generiert die Bildaufbereitungseinheit auf der Basis der von der Umfeldkamera generierten Bilddaten aufbereitete Bilddaten, die nachfolgend in der Bildauswerteeinheit ausgewertet werden.

Das heißt also, dass die von der Umfeldkamera generierten Bilddaten zunächst mit Hilfe von in der Bildaufbereitungseinheit hinterlegten Algorithmen angepasst und somit verändert werden, bevor diese dann in der Bildauswerteeinheit nach an sich bekanntem Prinzip ausgewertet werden. Für die Aufbereitung werden zum Beispiel Skalierungs-Algorithmen genutzt, wie sie prinzipiell aus dem Fachbereich Unterhaltungselektronik bekannt sind, wobei eine Auflösungsreduzierung beispielweise durch ein Zusammenfassen mehrerer Pixel, also einem Ersetzen mehrerer Pixel durch ein neues virtuelles Pixel, erreicht wird und wobei eine Auflösungserhöhung zum Beispiel durch eine Erzeugung zusätzlicher virtueller Pixel durch Interpolation erzielt wird. Die Aufbereitung der Bilddaten in der Bildaufbereitungseinheit bedingt dabei unter anderem eine Reduzierung von Bildverzerrungen, die sich aus der variierenden Winkelauflösung der Umfeldkamera ergeben. Entsprechende Bildverzerrungen werden hierbei quasi aus den mittels der Umfeldkamera generierten Bilddaten herausgerechnet, um so zum Beispiel eine Objekterkennung mit Hilfe der Bildauswerteeinheit zu erleichtern.

Da die Umfeldkamera typischerweise im Betrieb eine Abfolge oder Sequenz von Einzelbildern generiert, ist es weiter von Vorteil, wenn die Bildaufbereitungseinheit derart eingerichtet ist, dass die Winkelauflösung eines jeden Einzelbildes im Rahmen der Aufbereitung nach einem hinterlegten Schema angepasst wird, wobei zweckdienlicherweise für jedes Einzelbild das gleiche Schema angewendet wird. Bevorzugt erfolgt hierbei jedoch keine einfache Hochskalierung oder Herunterskalierung der gesamten Einzelbilder, stattdessen wird bevorzugt lediglich ein ganz bestimmter Bereich innerhalb eines jeden Einzelbildes aufbereitet, so dass lediglich in diesem Bereich die Auflösung, also die Winkelauflösung, angepasst wird.

Die Anpassung der Winkelauflösung erfolgt hierbei weiter bevorzugt lediglich im Übergangsbereich eines jeden Einzelbildes, also in dem Bereich, in dem die Winkelauflösung innerhalb des horizontalen Bildwinkels in den von der Umfeldkamera generierten Einzelbildern in Abhängigkeit des Winkels bezogen auf die optische Achse variiert.

In jedem Fall wird jedoch der Übergangsbereich virtuell in einen ersten, an den Mittenbereich unmittelbar angrenzenden Übergangsteilbereich und in einem zweiten, an den Randbereich unmittelbar angrenzenden Übergangsteilbereich aufgeteilt, wobei hierfür ein Grenzwinkel in einem Speicher der Bildaufbereitungseinheit hinterlegt ist, der die Grenze zwischen den beiden Übergangsteilbereichen festlegt. Dann wird dann die Winkelauflösung im ersten Übergangsbereich im Zuge der Aufbereitung in der Bildaufbereitungseinheit virtuell erhöht und dabei insbesondere auf die Winkelauflösung im Mittenbereich hochgerechnet. Zudem wird die Winkelauflösung im zweiten Übergangsteilbereich im Zuge der Aufbereitung virtuell reduziert und dabei insbesondere auf die Winkelauflösung im Randbereich heruntergerechnet.

Ist also nun in einem Mittenbereich und in einem Randbereich jeweils eine im Wesentlichen konstante Winkelauflösung gegeben mit unterschiedlichen Werten und fällt die Winkelauflösung im Zwischenbereich zwischen dem Mittenbereich und dem Randbereich allmählich vom Wert der Winkelauflösung im Mittenbereich auf den Wert der Winkelauflösung im Randbereich ab, so wird eine Aufbereitung der Bilddaten bevorzugt derart vorgenommen, dass in den aufbereiteten Bilddaten, insbesondere in den aufbereiteten Einzelbildern, die winkelabhängige virtuelle Winkelauflösung von der optischen Achse ausgehend bis zum Grenzwinkel konstant ist am Grenzwinkel sprungartig oder stufenartig auf den Wert der Winkelauflösung im Randbereich abfällt und dann wieder vom Grenzwinkel bis zum Rand des horizontalen Bildwinkels im Wesentlichen kontant ist.

Somit sind dann in den Einzelbildern ein zentraler Bereich mit größerer Winkelauflösung und ein diesen zentralen Bereich unmittelbar umgebender Bereich mit geringerer Winkelauflösung gegeben, wobei zwischen diesen beiden Bereichen eine scharfe Grenze vorliegt. Einen Übergangsbereich oder eine Übergangszone, in der die Winkelauflösung allmählich von dem höheren auf den geringeren Wert abfällt, wie sie in dem von der Umfeldkamera generierten Einzelbildern gegeben ist, ist somit in den aufbereiteten Einzelbildern nicht mehr vorhanden. Gerade die sich mit dem Winkel allmählich verändernde Winkelauflösung bedingt typischerweise eine verzerrte Abbildung von Objekten, die in dem zum Übergangsbereich gehörigen Winkelbereich abgebildet sind, und diese Verzerrungen werden durch die Anpassung der Winkelauflösung quasi herausgerechnet. Infolgedessen ist dann die Objekterkennung in der Bildauswerteeinheit einfacher zu bewerkstelligen.

Wie zuvor erwähnt weist das Fahrerassistenzsystem eine Umfeldkamera mit einem um eine optische Achse gelegenen horizontalen Bildwinkel und mit einer über den horizontalen Bildwinkel hinweg variierenden Winkelauflösung $k=k(\alpha)$. Dabei ist die Winkelauflösung $k$ von der optischen Achse $\alpha_{OA} = 0°$ ausgehend bis zu einem Winkel $\alpha_1$ mit $\alpha_1 > \alpha_{OA}$ im Wesentlichen konstant, fällt zwischen dem Winkel $\alpha_1$ und einem Winkel $\alpha_2$ mit größer werdendem Winkel $\alpha$ ab und ist dann wieder aus-

gehend vom Winkel $\alpha_2 > \alpha_1$ bis zum Rand des horizontalen Bildwinkels $\alpha_R$ mit $\alpha_R > \alpha_2$ im Wesentlichen konstant. Hierbei ist die Winkelauflösung zwischen $\alpha_1$ und $\alpha_2$ bevorzugt derart vorgegeben, dass der Abfall der Winkelauflösung $k(\alpha) < (k_1 / f) / \alpha_1$ ist mit der vorgegebenen Winkelauflösung $k_1$ bei $\alpha_1$. Dabei ist mittels f zudem vorgegeben, um welchen Faktor die Auflösung zwischen $\alpha_1$ und $\alpha_2$ reduziert werden soll. Bevorzug wird dabei ein Faktor gewählt, der einem ganzzahligen Vielfachen von 2 entspricht, also zum Beispiel f = 2.

Durch die Begrenzung oder die Vorgabe eines Höchstwertes für den Abfall der Winkelauflösung wird sichergestellt, dass die Objekterkennung in einem vorgegebenen Abstandsbereich zum Kraftfahrzeug mit dem Fahrerassistenzsystem unabhängig vom Abstand möglich ist. Dabei gilt es zu bedenken, dass für die Objekterkennung typischerweise eine Mindestauflösung erforderlich ist, woraus sich wiederum eine Mindestanforderung an die Winkelauflösung ergibt. Jene Mindestanforderung an die Winkelauflösung reduziert sich jedoch bei gegebener Auflöseanforderung für die Objekterkennung mit geringer werdendem Abstand zwischen dem Kraftfahrzeug mit dem Fahrerassistenzsystem und dem zu erkennenden Objekt, so dass die winkelabhängige Winkelauflösung der Umfeldkamera mit zunehmendem Winkel in einem bestimmten Maße abnehmen kann, ohne dass hierdurch die Mindestanforderung an die Auflösung oder die Mindestauflösung unterschritten wird.

Dieser Sachverhalt lässt sich anhand einer einfachen Betrachtung gut nachvollziehen. Geht man von einem geraden Straßenverlauf aus und einem Verkehrsschild, welches am Fahrbahnrand positioniert ist, so wird die Abbildung des Verkehrsschildes in einer fortlaufenden Sequenz von Einzelbildern aus einem Mittenbereich der Einzelbilder allmählich in einen Randbereich der Einzelbilder wandern und dabei zunehmend, bezogen auf die Bildgröße der Einzelbilder, größer werden, wenn sich das Fahrzeug mit dem Fahrerassistenzsystem auf das Verkehrsschild zubewegt. Da zur Erkennung des Verkehrsschildes beispielsweise die Breite des Verkehrsschildes durch eine bestimmte Mindestanzahl von Pixeln im Einzelbild abgebildet werden muss und die Größe des Verkehrsschildes in der Abbildung zunimmt, je weiter das Verkehrsschild in Richtung Rand der Einzelbilder wandert, reduziert sich die Anforderung an die Winkelauflösung mit zunehmendem Winkel von der optischen Achse ausgehend bis zum Rand der Einzelbilder. Es ist somit also zum Beispiel möglich, vorzugeben, dass ein bestimmtes Objekt, wie ein Verkehrsschild, in den Einzelbildern der Umfeldkamera durch eine feste Anzahl Pixel wiedergegeben wird, wobei in diesem Grenzfall die Vergrößerung der Darstellung des Verkehrsschildes bei geringer werdendem Abstand des Kraftfahrzeuges mit dem Fahrerassistenzsystem zum Verkehrsschild durch die mit größer werdendem Winkel kleiner werdende Winkelauflösung gerade kompensiert wird. Dieser Grenzfall lässt sich abschätzen und fordert einen Abfall der Winkelauflösung von $(k_1 / f) / \alpha_1$.

Dabei handelt es sich selbstverständlich um einen Näherung, bei der unter anderem vernachlässigt wird, dass sich der Sichtwinkel auf das Verkehrsschild mit dem Abstand zum Verkehrsschild ändert. Außerdem wurde vereinfachend angenommen, dass bei der Umfeldkamera eine zur optischen Achse rotationssymmetrische 2D-Verteilung der Winkelauflösung gegeben ist und dass sich das Verkehrsschild quasi entlang einer Geraden bewegt, die ausgehend von der optischen Achse radial nach außen verläuft. Durch exaktere Berechnungen lässt sich jedoch ohne Weiteres auch ein genauerer Wert oder ein funktionaler Zusammenhang ermitteln.

Wählt man nun den Verlauf der Winkelauflösung gemäß der zuvor beschriebenen Grenzwertbedingung, so wird einerseits erreicht, dass die Objekterkennung unabhängig vom Abstand im vorgegebenen Abstandsbereich möglich ist, und andererseits wird die Anzahl der benötigten Pixel gering gehalten. Dabei gilt es zu bedenken, dass mit zunehmender Winkelauflösung auch die Anzahl der benötigten Pixel steigt, wodurch sowohl der Fertigungsaufwand als auch die Kosten für eine entsprechende Umfeldkamera steigen. Wählt man also für die Winkelauflösung einen wesentlich kleineren oder schwächeren Abfall als dies eigentlich nötig wäre, um die Auflöseanforderung für die Objekterkennung zu erfüllen, so bedeutet dies auch, dass mehr Pixel als eigentlich benötigt vorgesehen werden müssen und dass dementsprechend ein höherer Fertigungsaufwand und höhere Fertigungskosten einkalkuliert werden müssen. Wählt man einen größeren oder stärkeren Abfall, so müssen ebenfalls mehr Pixel als eigentlich benötigt vorgesehen werden, da in diesem Fall $\alpha_1$ größer sein muss, um dennoch die Auflöseanforderungen im gesamten Übergangsbereich erfüllen zu können.

Zudem entspricht die Winkelauflösung im Mittenbereich bevorzugt einem ganzzahligen Vielfachen der doppelten Winkelauflösung im Randbereich, also im einfachsten Fall der doppelten Winkelauflösung im Randbereich.

Diese Relation zwischen der Winkelauflösung im Mittenbereich und der Winkelauflösung im Randbereich wird bevorzugt bei allen Ausführungsvarianten des hier vorgestellten Fahrerassistenzsystems realisiert, da sich hierdurch die Datenverarbeitung und insbesondere eine Aufbereitung von Bilddaten in einer Bildauswerteeinheit wesentlich einfacher gestaltet.

Für die zuvor beschriebenen Ausführungsvarianten des Fahrerassistenzsystems wird zudem bevorzugt eine Winkelauflösung realisiert, deren Verlauf innerhalb des horizontalen Bildwinkels symmetrisch zur optischen Achse ist. Trägt man also zum Beispiel den winkelabhängigen Verlauf der Winkelauflösung in ein kartesisches Koordinatensystem ein, so ist der Verlauf der Winkelauflösung achsensymmetrisch zu der Koordinatenachse, mit den Winkelauflösungswerten.

Darüber hinaus ist die Winkelauflösung, genauer die zweidimensionale Verteilung der Winkelauflösung, bevorzugt rotationssymmetrisch zur optischen Achse, so dass der Mittenbereich durch eine Kreisfläche und der Randbereich durch eine Ringfläche gegeben ist.

Außerdem weist die Umfeldkamera bei allen zuvor beschriebenen Ausführungsvarianten bevorzugt eine Optik und einen aus einer Vielzahl von Pixeln aufgebauten Bildsensor auf. Dabei sind die Pixel des Bildsensors weiter bevorzugt einheitlich ausgestaltet, weisen also auch eine einheitliche Größe auf, und darüber hinaus gleichmäßig über die gesamte Sensorfläche des Bildsensors verteilt. Die uneinheitliche Winkelauflösung wird dementsprechend bevorzugt durch die Optik vorgegeben. Die Optik ist dabei zum Beispiel zylindersymmetrisch oder elliptisch ausgestaltet oder aber, wie bevorzugt, rotationssymmetrisch zur optischen Achse.

Ausführungsbeispiele der Erfindung werden nachfolgend anhand einer schematischen Zeichnung näher erläutert. Darin zeigen:

Fig. 1 in einer Art Blockschaltbild ein Kraftfahrzeug mit einem Fahrerassistenzsystem umfassend eine Umfeldkamera,

Fig. 2 in einem Diagramm die zweidimensionale Winkelauflösung der Umfeldkamera,

Fig. 3 in einem Diagramm der Verlauf der Winkelauflösung innerhalb eines halben horizontalen Bildwinkels der Umfeldkamera sowie

Fig. 4 in einer geometrischen Darstellung die vorgegebenen Randbedingungen für einen vorteilhaften Verlauf der Winkelauflösung innerhalb eines halben horizontalen Bildwinkels der Umfeldkamera.

Einander entsprechende Teile sind in allen Figuren jeweils mit den gleichen Bezugszeichen versehen.

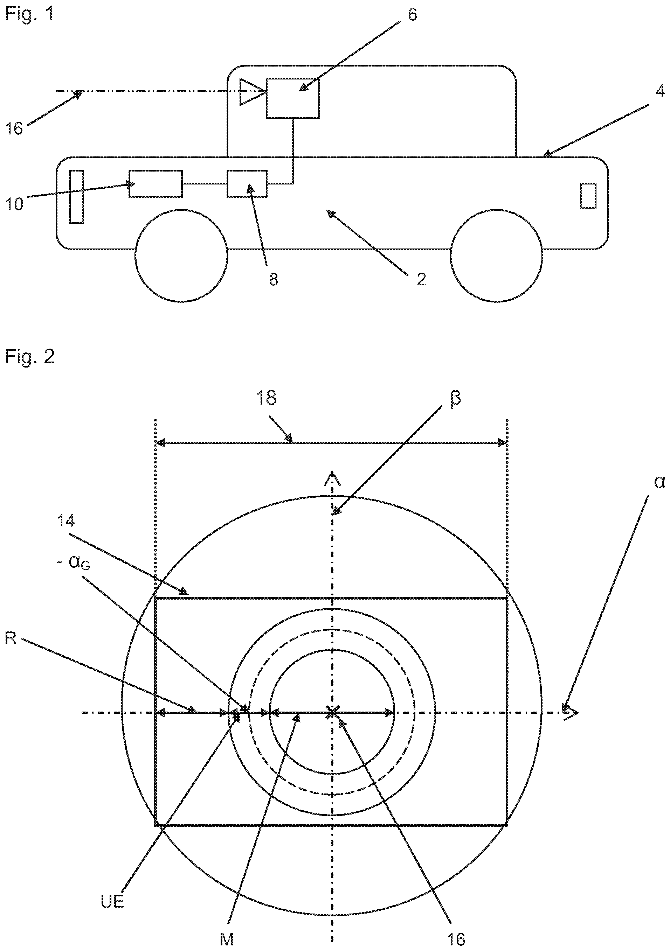

Ein nachfolgend exemplarisch beschriebenes und in Fig. 1 skizziertes Fahrerassistenzsystem 2 ist in ein Kraftfahrzeug 4 integriert und umfasst eine Umfeldkamera 6, eine Bildaufbereitungseinheit 8 sowie eine Bildauswerteeinheit 10. Die Umfeldkamera 6 dient hierbei zur Generierung von Bilddaten BD, die das Umfeld des Kraftfahrzeuges 4, genauer das Vorfeld des Kraftfahrzeuges 4, abbilden. Jene Bilddaten BD werden dann über eine Signalleitung an die Bildaufbereitungseinheit 8 übermittelt und in der Bildaufbereitungseinheit 8 aufbereitet. Die Bildaufbereitungseinheit 8 wiederum gibt aufbereitete Bilddaten ABD aus, die weiter an die Bildauswerteeinheit 10 über eine Signalleitung übertragen und hier nach an sich bekanntem Prinzip ausgewertet werden.

Im Rahmen dieser Auswertung werden dann zum Beispiel Objekte, wie Hindernisse oder andere Verkehrsteilnehmer, mittels eines Objekterkennungs-Algorithmus erkannt und zudem werden die Abstände zwischen dem Kraftfahrzeug 4 mit dem Fahrerassistenzsystem 2 und den erkannten Objekten ermittelt. Je nach Ausführungsvariante des Fahrerassistenzsystems 2 werden die bei der Auswertung der Bilddaten ABD gewonnenen Informationen schließlich genutzt, um entweder einen Fahrer des Kraftfahrzeuges 4 bei der Fahrzeugführung zu unterstützen, indem dieser beispielsweise durch optische und/oder akustische Signale auf Hindernisse oder andere Verkehrsteilnehmer hingewiesen wird, oder aber um auf der Basis dieser Informationen eine vollautomatisierte Fahrzeugführung durch das Fahrerassistenzsystem 2 zu realisieren.

Zur Generierung der Bilddaten BD umfasst die Umfeldkamera 6 in diesem Ausführungsbeispiel eine Optik 12 sowie einen Bildsensor 14, der aus einer Vielzahl von Pixeln aufgebaut ist. Die Pixel weisen hierbei eine einheitliche Ausgestaltung sowie ein einheitliche Größe auf und sind gleichmäßig über die gesamte Sensorfläche des Bildsensors 14 verteilt.

Weiter ist die Optik 12 derart gestaltet, dass durch diese eine uneinheitliche Winkelauflösung $k=k(a)$ bei der Umfeldkamera 6 gegeben ist. Hierzu weist die Umfeldkamera 6 einen symmetrisch um eine optische Achse 16 gelegenen horizontalen Bildwinkel 18 auf, wobei die Winkelauflösung $k$ in Abhängigkeit des Winkels $\alpha$ über den horizontalen Bildwinkel 18 hinweg variiert. Der Verlauf der Winkelauflösung $k$ ist dabei dergestalt, dass die Winkelauflösung $k$ in einem Mittenbereich M um die optische Achse 16 konstant ist, in einem sich an den Mittenbereich M unmittelbar anschließenden Übergangsbereich UE variiert und in einem sich an den Übergangsbereich UE unmittelbar anschließenden Randbereich R am Rande des horizontalen Winkels 18 wiederum konstant ist.

Der winkelabhängige Verlauf der Winkelauflösung $k$ innerhalb des horizontalen Bildwinkels 18 mit den Berandungen $-\alpha_R$ und $+\alpha_R$ ist dabei zudem symmetrisch zur optischen Achse 16 bei $\alpha_{OA}=0°$, so dass $k(-\alpha) = k(\alpha)$ gilt. Der Winkel $\alpha$ läuft hierbei von $-\alpha_R$ bis $+\alpha_R$ mit $+/- \alpha_R = +/- 25°$. Der horizontale Bildwinkel 18 beträgt demnach $2\alpha_R = 50°$.

Darüber hinaus ist die durch die Optik 12 bestimmte zweidimensionale Winkelauflösung $k_{2D} = k_{2D}(\alpha, \beta)$ oder die 2D-Verteilung der Winkelauflösung $k_{2D}$ rotationssymmetrisch zur optischen Achse 16, sodass der Mittenbereich M, wie in Fig. 2 angedeutet, durch eine Kreisfläche gegeben ist und der Übergangsbereich UE einerseits sowie der Randbereich R andererseits jeweils durch eine Ringfläche gegeben sind.

In Fig. 2 ist zudem der Bildsensor 14 angedeutet, mit dessen Hilfe im Betrieb der Umfeldkamera 6 in einer Sequenz fortlaufend Einzelbilder generiert werden. Jener Bildsensor 14 weist zwar, wie zuvor dargelegt, eine über die gesamt Sensorfläche hinweg einheitliche Auflösung auf, allerdings werden aufgrund der Ausgestaltung der Optik 12 unterschiedlich große Raumwinkel auf die einzelnen Pixel des Bildsensors 14 projiziert oder abgebildet, je nachdem welcher Bereich der Optik 12 dem entsprechenden Pixel zugeordnet ist. Dementsprechend ist dann in einem jeden Einzelbild, sofern man dieses 1 : 1 wiedergibt, also beispielsweise über einen Bildschirm mit derselben Anzahl von Pixeln wie der Bildsensor 14, bei dem die Pixel ebenfalls einheitlich ausgestaltet und gleichmäßig verteilt sind, eine verzerrte Abbildung des Umfeldes gegeben. Dabei bilden im Mittenbereich M eines jeden Einzelbildes eine größere Anzahl von Pixeln eine Raumwinkeleinheit ab, als in den übrigen Bereichen, sodass die Bilddaten BD die durch die Optik 12 vorgegebene Verteilung der Winkelauflösung k wiedergeben.

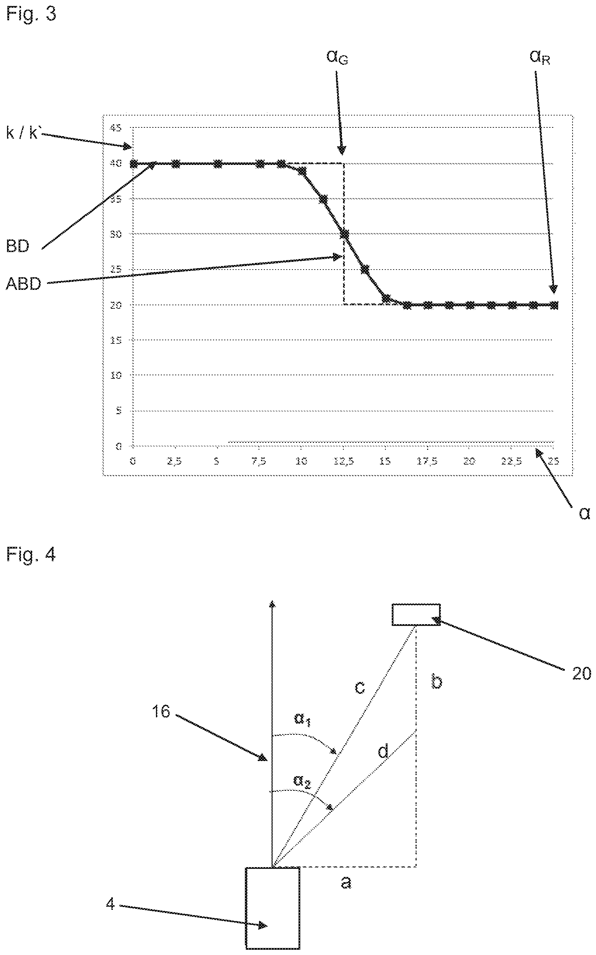

Der Verlauf der so realisierten Winkelauflösung k ist in Fig. 3 ist für eine Hälfte des horizontalen Bildwinkels 18 in einem Diagramm wiedergegeben. Dabei läuft $\alpha$ von 0 °, also von der optischen Achse 16 ausgehend, bis 25°, was dem rechten Rand des horizontalen Bildwinkels $+\alpha_R$ entspricht. Aufgrund des symmetrischen Verlaufs der Winkelauflösung k erhält man den Verlauf der Winkelauflösung k innerhalb der zweiten Hälfte des horizontalen Bildwinkels 18 durch eine Spiegelung an der Achse k($\alpha$) des kartesischen Koordinatensystems.

Dabei zeigt die durchgezogene Linie im Diagramm den Verlauf der Winkelauflösung k in Abhängigkeit des Winkels a, wie er mithilfe der speziellen Gestaltung der Optik 12 für die Umfeldkamera 6 realisiert ist und in den von der Umfeldkamera 6 generierten Bilddaten BD wiedergegeben wird. In der Bildaufbereitungseinheit 8 werden die von der Umfeldkamera 6 generierten Bilddaten BD, wie zuvor erwähnt, aufbereitet und dabei in aufbereitete Bilddaten ABD umgewandelt. Infolge dieser Aufbereitung erfolgt auch eine Anpassung der Winkelauflösung k($\alpha$), so dass die aufbereiteten Bilddaten ABD eine Winkelauflösung k' = k'($\alpha$) wiedergeben, die in Fig. 3 durch die gestrichelte Linie angedeutet ist. Da die Anpassung im Rahmen einer Datenverarbeitung erfolgt, wird die Winkelauflösung k' in auch als virtuelle Winkelauflösung k' bezeichnet.

Die Aufbereitung erfolgt hierbei Einzelbild für Einzelbild, wobei lediglich diejenigen Bilddaten BD eines jeden Einzelbildes angepasst werden, die den Übergangsbereich UE abbilden. Hierzu ist in der Bildaufbereitungseinheit 8 ein Grenzwinkel $\alpha_G$ = 12,5° hinterlegt, der den Übergangsbereich UE, welcher zwischen $\alpha_1$ = 8,5° und $\alpha_2$ = 16,5° liegt, in zwei Übergangsteilbereiche unterteilt. Im Rahmen der Aufbereitung der Bilddaten BD erfolgt dann im ersten Übergangsteilbereich zwischen $\alpha_1$ und $\alpha_G$ eine virtuelle Erhöhung der Winkelauflösung k, wobei hierzu zusätzliche virtuelle Pixel durch Interpolation generiert werden. Zudem erfolgt im zweiten Übergangsteilbereich von $\alpha_G$ bis $\alpha_2$ eine virtuelle Absenkung oder Verringerung der Winkelauflösung k, indem mehrere Pixel zu einem virtuellen neuen Pixel zusammengefasst werden.

Infolge dessen geben dann die aufbereiteten Bilddaten ABD eine Winkelauflösung k' wieder mit k'($\alpha$) = 40 Pixel/° für $\alpha \in [\alpha_{OA}; \alpha_G]$ und mit k'($\alpha$) = 20 Pixel/° für $\alpha \in [\alpha_G; \alpha_R]$. Für die Winkelauflösung k'($\alpha$) sind somit nur noch zwei diskrete Werte gegeben, wobei beim Grenzwinkel $\alpha_G$ ein sprunghafter Übergang zwischen diesen beiden Werten erfolgt. Im Rahmen der Aufbereitung der Bilddaten BD erfolgt somit eine Art Rektifizierung des Verlaufes der Winkelauflösung k. Eine analoge Anpassung erfolgt auch beim Verlauf der Winkelauflösung k innerhalb der zweiten Hälfte des horizontalen Bildwinkels 18, so dass k'($\alpha$) = 40 Pixel/° für $\alpha \in [\alpha_{OA}; -\alpha_G]$ und mit k'($\alpha$) = 20 Pixel/° für $\alpha \in [-\alpha_G; -\alpha_R]$ gilt. Das damit verbundene Prinzip wird zudem auf die zweidimensionale Winkelauflösung $k_{2D} = k_{2D}(\alpha,\beta)$ übertragen.

Die so aufbereiteten Bilddaten ABD werden nachfolgend an die Bildauswerteinheit 10 übermittelt, wobei sich die Auswertung der aufbereiteten Bilddaten ABD aufgrund der Aufbereitung insbesondere hinsichtlich der Datenverarbeitung einfacher gestaltet. Ebenfalls günstig auf die Datenverarbeitung wirkt sich der Umstand aus, dass die zwei diskreten Werte der virtuellen Winkelauflösung k'($\alpha$) so gewählt sind, dass für diese ein Verhältnis 2 : 1 gegeben ist.

Bei einem weiteren nachfolgend beschriebenen Ausführungsbeispiel ist die Optik 12 der Umfeldkamera 6 derart gestaltet, dass die Winkelauflösung k($\alpha$) bis zu einem Winkel $\alpha_1$ = 10° konstant 50 Pixel/° beträgt, dann bis zu einem Winkel $\alpha_2$ = 20° mit (2,5 Pixel/°)/° abfällt und schließlich vom Winkel $\alpha_2$ ausgehend bis zum Rand des horizontalen Bildwinkels $\alpha_R$ konstant 25 Pixel/° beträgt, wobei der Einfachheit halber wiederum nur der eindimensionale Fall und nur eine Hälfte des horizontalen Bildwinkels 18 betrachtet wird.

Auf diese Weise soll ein bestimmtes Objekt, hier ein Verkehrsschild 20, in den Einzelbildern der Umfeldkamera 6 in einem vorgegebenen Abstandsbereich vor dem Kraftfahrzeug 4 durch eine feste Anzahl Pixel wiedergegeben werden, wobei in diesem Sonderfall die Vergrößerung der Darstellung des Verkehrsschildes 20 bei geringer werdendem Abstand des Kraftfahrzeuges 4 mit dem Fahrerassistenzsystem 2 zum Verkehrsschild 20 in diesem Abstandsbereich durch die mit größer werdendem Winkel $\alpha$ kleiner werdende Winkelauflösung k gerade kompensiert wird.

Dabei wird von einem geraden Straßenverlauf ausgegangen und einem Verkehrsschild 20, welches am Fahrbahnrand und somit, wie in Fig. 4 skizziert, in einem seitlichen Abstand a zum Kraftfahrzeug 4 positioniert ist. Außerdem wird vereinfachend angenommen, dass bei der Umfeldkamera 6 eine zur optischen Achse 16 rotationssymmetrische 2D-Verteilung der Winkelauflösung $k_{2D}$ gegeben ist und dass sich das Verkehrsschild 20 in den Einzelbildern quasi entlang einer Geraden bewegt, die ausgehend von der optischen Achse 16 radial nach außen verläuft.

Das Verkehrsschild 20 soll nun bis zu einer Entfernung c durch das Fahrerassistenzsystem 2 erkannt werden, wofür exemplarisch eine Auflösung k($\alpha_1$ =10°) = $k_1$ = 50 Pixel/° benötigt wird. In der Entfernung d = c/2 ist dann zur Erkennung des Verkehrsschildes 20 nur noch die halbe Auflösung $k_2(\alpha_2$ =20°) = $k_2$ = $k_1$/2 = 25 Pixel/° erforderlich.

Hierbei wird unter anderem vernachlässigt, dass das Verkehrsschild 20 zusätzlich wegen der Parallaxe bei größeren Winkeln $\alpha$ etwas verkleinert erscheint, da sich quasi der Sichtwinkel auf das Verkehrsschild 20 mit dem Abstand zum Verkehrsschild 20 ändert. Dieser Fehler ist proportional zu $(\cos\alpha_1 - \cos\alpha_2)$ und für kleine Winkel a, zumindest in dieser Betrachtung, vernachlässigbar (z.B. ändert sich der Wert von cosa zwischen 10° und 20° um 4,5%). Bei einer genaueren Abschätzung müsste also die Auflösung k um diesen Wert wieder angehoben werden, um weiterhin ausreichende Auflösung k zu gewährleisten.

Die Änderung der Auflösung k zwischen den Winkeln $\alpha_1$ und $\alpha_2$ sollte dann:

$$(k_1/2) \ / \ (\alpha 1 - \alpha 2)$$

betragen oder:

$$\frac{k_1/2}{\arcsin\left(\frac{2a}{c}\right) - \arcsin\left(\frac{a}{c}\right)}$$

Mit $a/c = \sin\alpha_1$ wird hieraus:

$$\frac{k_1/2}{\arcsin(2\sin\alpha_1) - \arcsin(\sin\alpha_1)}$$

oder:

$$\frac{k_1/2}{\arcsin(2\sin\alpha_1) - \alpha_1}$$

Für kleine Winkel $\alpha_1$ ist $\arcsin(2\sin\alpha_1)$ ungefähr gleich $2\alpha_1$, so dass sich für den Auflösungsabfall ergibt:

$$\frac{\frac{k_1}{2}}{\alpha_1}$$

Sollen also das Verkehrsschild 20 bei einem Öffnungswinkel von $\alpha_1 = 10°$ erkannt werden und ist hierfür eine Winkelauflösung von $k_1(\alpha_1) = 50$ Pixel/° notwendig, so ist die Optik 12 so zu designen, dass die Winkelauflösung k für größere Winkel $\alpha > \alpha 1$ mit (25 Pixel/°) /10° = (2,5 Pixel/°)/° abfällt.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen.

Bezugszeichenliste

| | |
|---|---|
| 2 | Fahrerassistenzsystem |
| 4 | Kraftfahrzeug |
| 6 | Umfeldkamera |
| 8 | Bildaufbereitungseinheit |
| 10 | Bildauswerteeinheit |
| 12 | Optik |
| 14 | Bildsensor |
| 16 | optische Achse |
| 18 | horizontaler Bildwinkel |
| 20 | Verkehrsschild |

| | |
|---|---|
| BD | von der Umfeldkamera generierte Bilddaten |
| ABD | aufbereitete Bilddaten |

| | |
|---|---|
| M | Mittenbereich |
| UE | Übergangsbereich |
| R | Randbereich |

| | |
|---|---|
| k | Winkelauflösung $k(\alpha)$ |
| k' | virtuelle Winkelauflösung $k'(\alpha)$ |
| $k_{2D}$ | 2D-Verteilung der Winkelauflösung $k_{2D}(\alpha,\beta)$ |
| $\alpha$ | Winkel |
| $\alpha_G$ | Grenzwinkel |
| $\alpha_R$ | Rand des horizontalen Bildwinkels |

**Patentansprüche**

1. Fahrerassistenzsystem (2) für ein Kraftfahrzeug (4)

   • umfassend eine Umfeldkamera (6) mit einem um eine optische Achse (16) gelegenen horizontalen Bildwinkel (18) und mit einer über den horizontalen Bildwinkel (18) hinweg variierenden Winkelauflösung (k),

   - wobei die Winkelauflösung (k) in einem Mittenbereich (M) um die optische Achse (16) im Wesentlichen konstant ist,
   - wobei die Winkelauflösung (k) in einem Übergangsbereich (UE) variiert und
   - wobei die Winkelauflösung (k) in einem Randbereich (R) am Rande des horizontalen Bildwinkels (18) wiederum im Wesentlichen konstant ist,

   • weiter umfassend eine Bildaufbereitungseinheit (8), welche für eine Aufbereitung der Bilddaten (BD) der Umfeldkamera (6) zur Vorgabe einer virtuellen Winkelauflösung (k') eingerichtet ist, sowie
   • eine Bildauswerteeinheit (10), welche zur Auswertung der aufbereiteten Bilddaten (ABD) ausgebildet ist,

**dadurch gekennzeichnet, dass** ein Grenzwinkel ($\alpha_G$) in einem Speicher der Bildaufbereitungseinheit (8) hinterlegt ist, der den Übergangsbereich (UE) virtuell in einen ersten, an den Mittenbereich (M) angrenzenden Übergangsteilbereich und in einen zweiten, an den Randbereich (R) angrenzenden Übergangsteilbereich aufteilt, wobei die Winkelauflösung (k) im ersten Übergangsteilbereich im Zuge der Aufbereitung in der Bildaufbereitungseinheit (8) virtuell erhöht wird, insbesondere auf die Winkelauflösung (k) im Mittenbereich (M) hochgerechnet wird, und wobei die Winkelauflösung (k) im zweiten Übergangsteilbereich im Zuge der Aufbereitung in der Bildaufbereitungseinheit (8) virtuell reduziert wird, insbesondere auf die Winkelauflösung (k) im Randbereich (R) heruntergerechnet wird.

2.  Fahrerassistenzsystem (2) nach Anspruch 1, wobei die Umfeldkamera (6) im Betrieb eine Abfolge von Einzelbildern generiert und wobei die Bildaufbereitungseinheit (8) derart eingerichtet ist, dass die Winkelauflösung (k) eines jeden Einzelbildes nach einem hinterlegten Schema angepasst wird.

3.  Fahrerassistenzsystem (2) nach Anspruch 2, wobei lediglich die Winkelauflösung (k) im Übergangsbereich (UE) eines jeden Einzelbildes nach einem hinterlegten Schema angepasst wird.

4.  Fahrerassistenzsystem (2) nach einem der Ansprüche 1 bis 3 mit einer über den horizontalen Bildwinkel (18) hinweg variierenden Winkelauflösung k=k(a) mit einer Maßeinheit Pixel/°,

    - wobei die Winkelauflösung k von der optischen Achse $\alpha_{OA}$ ausgehend bis zu einem Winkel $\alpha_1 > \alpha_{OA}$ im Wesentlichen konstant ist,
    - wobei die Winkelauflösung k von einem Winkel $\alpha_2 > \alpha_1$ ausgehend bis zum Rand des horizontalen Bildwinkels $\alpha_R > \alpha_2$ wiederum im Wesentlichen konstant ist,
    - wobei die Winkelauflösung k zwischen $\alpha_1$ und $\alpha_2$ mit größer werdendem Winkel $\alpha$ abfällt und
    - wobei der Abfall der Winkelauflösung k=k(a) mit einer Maßeinheit (Pixel/°)/° kleiner ($k_1/2$)/ $\alpha_1$ ist mit der vorgegebenen Winkelauflösung $k_1$ bei $\alpha_1$.

5.  Fahrerassistenzsystem (2) nach einem der Ansprüche 1 bis 4, wobei die Winkelauflösung (k) im Mittenbereich (M) einem ganzzahligen Vielfachen der doppelten Winkelauflösung (k) im Randbereich (R) entspricht.

6.  Fahrerassistenzsystem (2) nach einem der der Ansprüche 1 bis 5, wobei der horizontalen Bildwinkel (18) symmetrisch um die optische Achse (16) liegt und wobei der winkelabhängige Verlauf der Winkelauflösung (k) innerhalb des horizontalen Bildwinkel (18) symmetrisch zur optischen Achse (16) ist.

7.  Fahrerassistenzsystem (2) nach Anspruch 6, wobei die 2D-Verteilung der Winkelauflösung ($k_{2D}=k_{2D}(\alpha,\beta)$) rotationssymmetrisch zur optischen Achse (16) ist.

8.  Fahrerassistenzsystem (2) nach einem der Ansprüche 1 bis 7, wobei die Umfeldkamera (6) eine Optik (12) und einen aus einer Vielzahl von Pixeln aufgebauten Bildsensor (14) umfasst, wobei die Pixel eine einheitliche Ausgestaltung aufweisen und gleichmäßig verteilt sind und wobei eine uneinheitliche Winkelauflösung (k) durch die Optik (12) vorgegeben ist.

**Claims**

1.  A driver assistance system (2) for a motor vehicle (4)

    • comprising an environment camera (6) with a horizontal angle of view (18) located around an optical axis (16) and with an angular resolution (k) varying over the horizontal angle of view (18),

       - wherein the angular resolution (k) is substantially constant in a central area (M) around the optical axis (16),
       - wherein the angular resolution (k) varies in a transition area (UE), and
       - wherein the angular resolution (k) is again substantially constant in an edge area (R) at the edge of the horizontal angle of view (18),

    • further comprising an image preparation unit (8) which is configured to prepare the image data (BD) of the environment camera (6) for specifying a virtual angular resolution (k'), and
    • an image evaluating unit (10) which is designed to evaluate the prepared image data (ABD),

    **characterized in that**
    a limiting angle ($\alpha_G$) which divides the transition area (UE) virtually into a first transition subarea adjoining the central area (M) and a second transition subarea adjoining the edge area (R) is stored in a storage of the image preparation unit (8), wherein the angular resolution (k) in the first transition subarea is increased virtually in the course of preparation in the image preparation unit (8), in particular is scaled up to the angular resolution (k) in the central area (M), and wherein the angular resolution (k) in the second transition subarea is reduced virtually in the course of preparation in the image preparation unit (M), in particular is scaled down to the angular resolution (k) in the edge area (R).

2. The driver assistance system (2) according to Claim 1, wherein the environment camera (6) generates a sequence of individual frames during operation, and wherein the image preparation unit (8) is configured such that the angular resolution (k) of each individual frame is adapted according to a stored scheme.

3. The driver assistance system (2) according to Claim 2, wherein only the angular resolution (k) in the transition area (UE) of each individual frame is adapted according to a stored schema.

4. The driver assistance system (2) according to any one of Claims 1 to 3 having an angular resolution k=k(a) varying over the horizontal angle of view (18) with a measurement unit of pixel/°,

   - wherein the angular resolution k is substantially constant proceeding from the optical axis $\alpha_{OA}$ to an angle $\alpha 1 > \alpha_{OA}$,
   - wherein the angular resolution k is again substantially constant proceeding from an angle $\alpha_2 > \alpha_1$ to the edge of the horizontal angle of view $\alpha_R > \alpha_2$,
   - wherein the angular resolution k drops at an increasingly greater angle $\alpha$ between $\alpha_1$ and $\alpha_2$, and
   - wherein the drop in the angular resolution $k=k(\alpha)$ with a measurement unit of (pixel/°)/° is less than $(k_1/_2)/\alpha_1$ with the predetermined angular resolution $k_1$ at $\alpha_1$.

5. The driver assistance system (2) according to any one of Claims 1 to 4, wherein the angular resolution (k) in the central area (M) corresponds to a whole number multiple of twice the angular resolution (k) in the edge area (R).

6. The driver assistance system (2) according to any one of Claims 1 to 5, wherein the horizontal angle of view (18) lies symmetrically around the optical axis (16), and wherein the angle-dependent progression of the angular resolution (k) within the horizontal angle of view (18) is symmetrical to the optical axis (16).

7. The driver assistance system (2) according to Claim 6, wherein the two-dimensional distribution of the angular resolution $(k_{2D}=k_{2D} (\alpha, \beta))$ is rotationally symmetrical to the optical axis (16).

8. The driver assistance system (2) according to any one of Claims 1 to 7, wherein the environment camera (6) comprises optics (12) and an image sensor (14) constructed from a plurality of pixels, wherein the pixels have a unitary configuration and are uniformly distributed, and wherein a non-uniform angular resolution (k) is predetermined by the optics (12).

## Revendications

1. Système d'assistance à la conduite (2) pour un véhicule automobile (4)

   • comprenant une caméra panoramique (6) avec un angle de visée horizontal (18) entourant un axe optique (16) et avec une résolution angulaire (k) variant sur l'étendue de l'angle de visée horizontal (18),

   - la résolution angulaire (k) étant sensiblement constante dans une zone centrale (M) autour de l'axe optique (16),
   - la résolution angulaire (k) variant dans une zone de transition (UE), et
   - la résolution angulaire (k) redevenant sensiblement constante dans une zone de bordure (R) au bord de l'angle de visée horizontal (18),

   • comprenant en outre une unité de traitement d'image (8), prévue pour traiter les données d'image (BD) de la caméra panoramique (6) pour la spécification d'une résolution angulaire virtuelle (k'), ainsi
   • qu'une unité d'analyse d'image (10) conçue pour analyser les données d'image traitées (ABD),

   **caractérisé**
   **en ce qu'**un angle limite ($\alpha_G$) est mémorisé dans une mémoire de l'unité de d'image (8), lequel partage virtuellement la zone de transition (UE) en une première zone de transition partielle contiguë à la zone centrale (M) et en une deuxième zone de transition partielle contiguë à la zone de bordure (R), la résolution angulaire (k) étant virtuellement élevée dans la première zone de transition partielle lors du traitement dans l'unité de traitement d'image (8), en particulier élevée à la résolution angulaire (k) dans la zone centrale (M), et la résolution angulaire (k) étant virtuellement élevée dans la deuxième zone de transition partielle lors du traitement dans l'unité de traitement d'image (8), en particulier ramenée à la résolution angulaire (k) dans la zone de bordure (R).

2. Système d'assistance à la conduite (2) selon la revendication 1, où la caméra panoramique (6) en service génère une suite d'images individuelles et où l'unité de traitement d'image (8) est prévue pour que la résolution angulaire (k) de chaque image individuelle soit ajustée suivant un schéma mémorisé.

3. Système d'assistance à la conduite (2) selon la revendication 2,
où seule la résolution angulaire (k) dans la zone de transition (UE) de chaque image individuelle est ajustée suivant un schéma mémorisé.

4. Système d'assistance à la conduite (2) selon l'une quelconque des revendications 1 à 3, ayant une résolution angulaire k=k(a) avec une unité de mesure Pixel/°variant sur l'étendue de l'angle de visée horizontal (18),

- où la résolution angulaire k est sensiblement constante à partir de l'axe optique $\alpha_{OA}$ jusqu'à un angle $\alpha_1 > \alpha_{OA}$,
- où la résolution angulaire k redevient sensiblement constante à partir d'un angle $\alpha_2 > \alpha_1$ jusqu'au bord de l'angle de visée horizontal $\alpha_R > \alpha_2$,
- où la résolution angulaire k baisse entre $\alpha_1$ et $\alpha_2$ à mesure que l'angle $\alpha$ s'agrandit et
- où la baisse de la résolution angulaire k=k(a) avec une unité de mesure (Pixel/°)/° est inférieure à $(k_{1/2})/ \alpha_1$ avec la résolution angulaire $k_1$ déterminée pour $\alpha_1$.

5. Système d'assistance à la conduite (2) selon l'une quelconque des revendications 1 à 4,
où la résolution angulaire (k) dans la zone centrale (M) correspond à un multiple entier du double de la résolution angulaire (k) dans la zone de bordure (R).

6. Système d'assistance à la conduite (2) selon l'une quelconque des revendications 1 à 5,
où l'angle de visée horizontal (18) entoure l'axe optique (16) de manière symétrique et où la variation dépendante de l'angle de la résolution angulaire (k) à l'intérieur de l'angle de visée horizontal (18) est symétrique par rapport à l'axe optique (16).

7. Système d'assistance à la conduite (2) selon la revendication 6,
où la distribution 2D de la résolution angulaire $(k_{2D}=k_{2D} (\alpha, \beta))$ est à symétrie de révolution par rapport à l'axe optique (16).

8. Système d'assistance à la conduite (2) selon l'une quelconque des revendications 1 à 7,
où la caméra panoramique (6) comprend une optique (12) et un capteur d'image (14) constitué d'une pluralité de pixels, où les pixels ont une structure uniforme et sont répartis régulièrement, et où une résolution angulaire (k) non uniforme est déterminée par l'optique (12).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SIMON THIBAULT.** *Panomorph Based Panoramic Vision Sensors,* August 2010, ISBN 978-953-30-7098-8, 1-28
- Active stereo vision system with foveated wide angle lenses. **YASUO KUNIYOHI et al.** RECENT DEVELOPMENTS IN COMPUTER VISION. SPRINGER BERLIN HEIDELBERG, 05. Dezember 1995, 191-200
- An advanced vision sensor with fovea. **SUEMATSU Y et al.** SIGNAL PROCESSING AND SYSTEM CONTROL. FACTORY AUTOMATION, 27. November 1990
- PROCEEDINGS OF THE ANNUAL CONFERENCE OF THE INDUSTRIAL ELECTRONICS SOCIETY. (IECON). IEEE, 27. November 1990, vol. 16, 581-585